# EUROPEAN PATENT APPLICATION

(11) **EP 1 801 808 A1**
(43) Date of publication of application: **27.06.2007**
(21) Application number: 06115058.7
(22) Date of filing: 07.06.2006
(51) Int. Cl.: G11B 27/28

(54) **Electronic device and scene skipping method**

(30) Priority: 21.12.2005 JP 2005368102
(71) Applicant: KABUSHIKI KAISHA TOSHIBA, Tokyo 105-8001 (JP)
(72) Inventor: Takahashi, Masaki, Tokyo 105-8001 (JP)
(74) Representative: Henkel, Feiler & Hänzel

(57) **Abstract**

According to one embodiment, an electronic device which reproduces moving image data recorded in a recording medium includes (i) a scene change point detection module (202) that detects a scene change point and (ii) a scene skipping module (201) that skips from a first position of the moving image data to a second position separated by a predetermined time interval and corrects the second position after skipping to the scene change point that is nearest to the second reproduction position.

## Description

Embodiments of the present invention relate to a reproduction control technique of moving image data suitably applied to an electronic device such as a HDD video recorder, a DVD video recorder or a notebook computer and the like.

With improvements of compression encoding techniques and image processing techniques in recent years, video recorders for recording and reproducing a program of a television broadcast as digital data have become rapidly prevalent. With respect to a video recorder of such a type, there have been a variety of proposals for improving a user's usability.

Japanese Patent Application KOKAI Publication No. 2005-80149 (hereinafter "the Japanese Publication") discloses a recording and reproduction apparatus. The apparatus is equipped with a mechanism for, when recorded data has been first reproduced, a fast fed part, for example, is stored by a user, and, at the time of subsequent reproduction, the fast fed part is skipped. In this manner, for example, if a commercial message part is fast fed at the time of first reproduction, this fast fed part is automatically skipped at the time of the subsequent reproduction, and thus, there is no need for repeating similar operation every time, which is convenient.

Here, it is presumed that two programs A and B are recorded, and the same commercial message parts are included in these programs. In this case, when program A has been first reproduced, if this commercial message part is fast fed (if the commercial message part is determined to be unnecessary), it is desirable that skipping of this commercial message part be performed at the time of reproduction of program B as well. However, in the technique set forth in the Japanese Publication mentioned previously, control is effected based on an operation made by a user with respect to each program, thus making it impossible to perform such skipping.

In addition, there are many cases in which the same commercial message parts are included in different parts of the same program. At the time of first reproduction as well, it is desirable that a commercial message part which is the same as the one fast fed be automatically skipped.

Further, fast feeding or skipping is often performed in excess of a desired position, and thus, a function for properly and automatically correcting a reproduction restart position is desired.

An object of the present invention is to provide an electronic device and an scene skipping method capable of learning a scene skipped in the past and automatically skipping the same scene.

According to an embodiment of the present invention, an electronic device which reproduces moving image data recorded in a recording medium, comprises means for comparing stored image data with an image data being reproduced, and means for skipping the moving image data ahead to a first position of the moving image data upon determination that the stored image data and the image data are coincident with each other.

According to an another embodiment of the present invention, a scene skipping method of an electronic device which reproduces moving image data recorded in a recording medium, comprises skipping the moving image data ahead to a first reproduction position of the moving image data in response to detecting a skipping instruction, storing image data in response to the skipping instruction, comparing the stored image data with an image data being reproduced, and skipping the moving image data ahead to a second reproduction position of the moving image data if the image data being reproduced and the stored image data are coincident with each other.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing a computer according to an embodiment of the present invention;
FIG. 2 is a diagram showing a system configuration of the computer according to an embodiment of the invention;
FIG. 3 is a block diagram depicting a functional configuration of video application programs for use in the computer according to an embodiment of the invention;
FIGS. 4A and 4B are conceptual views for illustrating a basic principle of learning a scene skipped in the past and automatically skipping the same scene, achieved by the video reproduction application program according to an embodiment of the invention;
FIG. 5 is a flow chart showing a first procedure for automatic skipping process executed by the video reproduction application program according to an embodiment of the invention; and
FIG. 6 is a flow chart showing a second procedure for automatic skipping process executed by the video reproduction application program according to an embodiment of the invention.

An embodiment of the present invention will be described below in detail referring to the accompanying drawings.

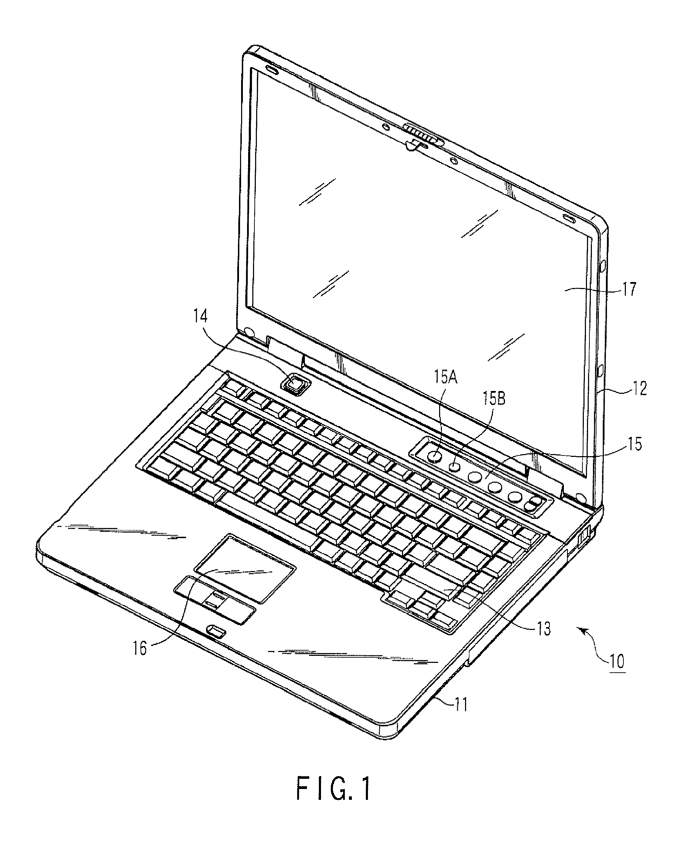

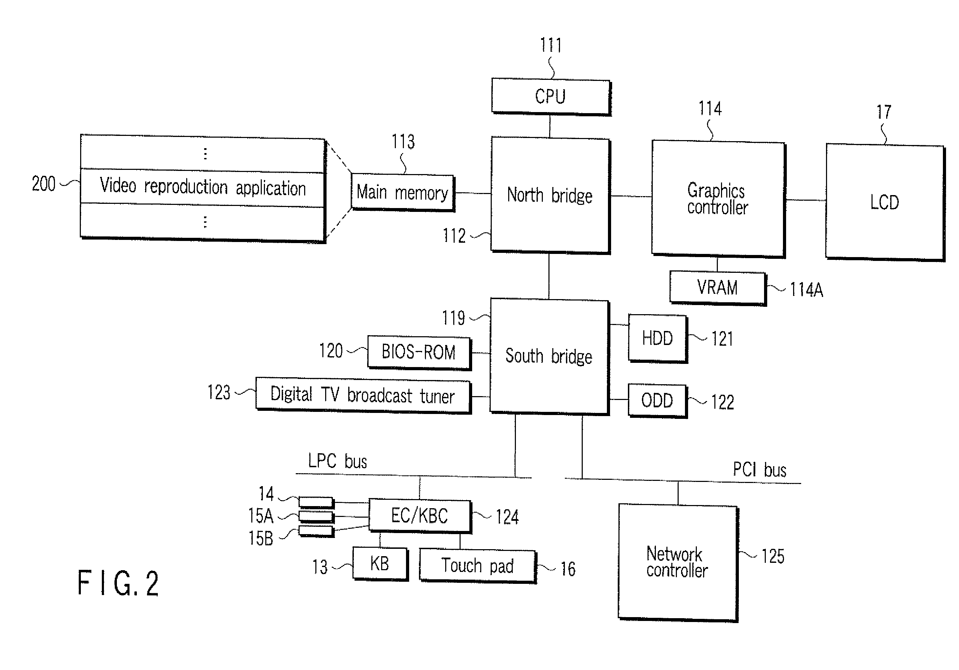

First, with reference to FIGS. 1 and 2, a description will be given with respect to a configuration of an information processing apparatus according to an embodiment of the present invention. This information processing apparatus is achieved as a computer 10, for example.

FIG. 1 is a perspective view in a state in which a display unit of the notebook computer 10 has been opened. This computer 10 is composed of a computer main body 11 and a display unit 12. A display device composed of a liquid crystal display (LCD) 17 is incorporated in the display unit 12, and a display screen of the LCD 17 is generally positioned at a center of the display unit 12.

The display unit 12 is mounted so as to be turnable between an open position and a closed position with respect to the computer main body 11. The computer main body 11 has a thin box shaped cabinet. On its upper face, a keyboard 13, a power button 14 to turn ON/OFF the power of the computer 10, an input operation panel 15, and a touch pad 16 or the like are disposed.

The input operation panel 15 is an input device to input an event which corresponds to a pressed button in a system, and is equipped with a plurality of buttons to start up a plurality of functions, respectively. These buttons include a TV startup button 15A and a digital versatile disc (DVD) startup button 15B. The TV startup button 15A is a button to start up a TV function to perform reproduction and recording of broadcast program data such as a digital TV broadcast program. When this button is pressed by a user, a TV application program to execute this TV function is started up. In addition, the DVD startup button 15B is a button to reproduce video contents recorded in a DVD. When this button is pressed by the user, an application program to reproduce the video contents is automatically started up.

With reference to FIG. 2, a system configuration of the computer 10 will be described here.

The computer 10, as shown in FIG. 2, is equipped with a CPU 111, a north bridge 112, a main memory 113, a graphics controller 114, a south bridge 119, a BIOS-ROM 120, a hard disk drive (HDD) 121, an optical disk drive (ODD) 122, a digital TV broadcast tuner 123, an embedded controller/keyboard controller IC (EC/KBC) 124, and a network controller 125 or the like.

The CPU 111 is a processor provided to control an operation of the computer 10, and executes an operating system (OS) and a variety of application programs such as a video reproduction application program to be loaded from the hard disk drive (HDD) 121 onto the main memory 113.

The video reproduction application program 200 is software to decode and reproduce compressed encoded moving image data. This video reproduction application program 200 is a software decoder compatible with the H. 264/AVC standard. The video reproduction application program 200 has a function to decode a moving image stream compressed and encoded in accordance with an encoding scheme defined in the H. 264/AVC standard (such as a digital TV broadcast program received by the digital TV broadcast tuner 123 or video contents in accordance with the high definition (HD) standard read out by the optical disk drive (ODD) 122, for example). In addition, the video reproduction application program 200 has a recording function which records a moving image stream of a digital TV broadcast program received by the digital TV broadcast tuner 123 and an edit function or the like to edit a moving image stream of a digital TV broadcast program recorded in the hard disk drive (HDD) 121.

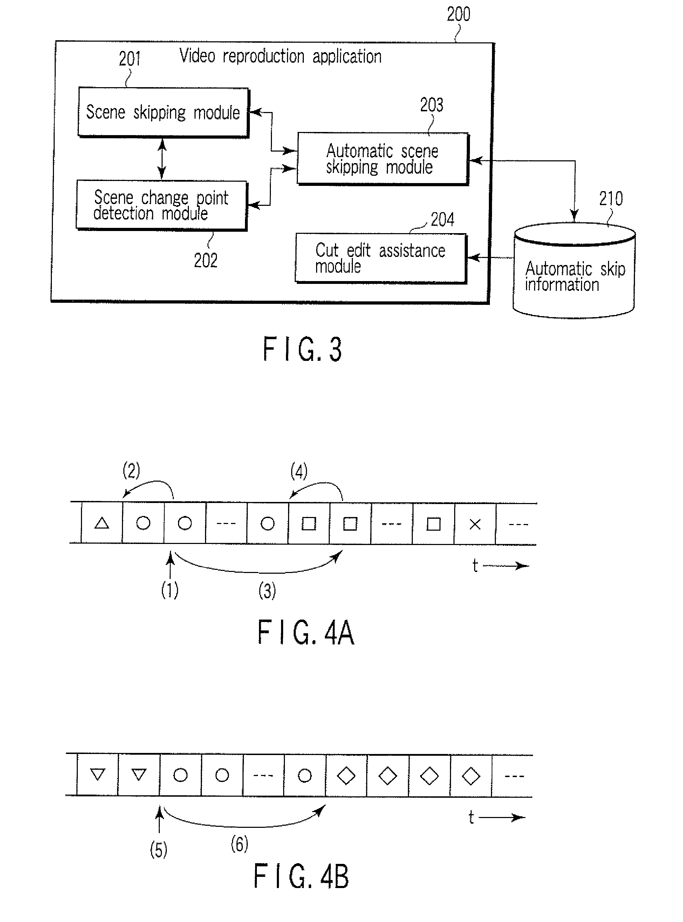

The video reproduction application program 200, apart from a basic module to execute a decoding process or the like defined in the H. 264/AVC standard, as shown in FIG. 3, is equipped with a number of extended modules such as a scene skipping module 201, a scene change point detection module 202, an automatic scene skipping module 203 and a cut edit assistance module 204 or the like.

The scene skipping module 201 is intended to skip a reproduction position by a predetermined time interval in accordance with a general length of commercial message such as a value of a multiple of 15 seconds, when a moving image stream of a digital TV broadcast program recorded in the hard disk drive (HDD) 121 is reproduced. In addition, the scene change point detection module 202 is intended to perform image analysis with respect to each image in a moving image stream and detect a reproduction position (scene change point) of an image which is greatly different from a previous image in image configuration (object image). Any of the existing techniques may be applied to the scene skipping module 201 and scene change point detection module 202. In addition, the automatic scene skipping module 203 and cut edit assistance module 204 utilize the scene skipping module 201 and scene change point detection module 202 to learn the scene skipped in the past and enable the same scene to be automatically skipped. These functions will be described later.

Referring back to FIG. 2, the CPU 111 executes a system basic input output system (BIOS) stored in the BIOS-ROM 120 as well. The system BIOS is a program for hardware control.

The north bridge 112 is a bridge device which connects between a local bus of the CPU 111 and the south bridge 119. A memory control which access-controls the main memory 113 is also incorporated in the north bridge 112. In addition, the north bridge 112 has a function, which establishes communication with the graphics controller 114 via an accelerated graphics port (AGP) bus and the like.

The graphics controller 114 is a display controller which controls the LCD 17 used as a display monitor of the computer 10. The graphics controller 114 generates a display signal to be sent to the LCD 17 from the image data written into a video memory (VRAM) 114A.

The south bridge 119 controls devices on a low pin count (LPC) bus and devices on a peripheral component interconnect (PCI) bus. In addition, the south bridge 119 incorporates an integrated drive electronics (IDE) controller to control the HDD 121 and the ODD 122. Further, the south bridge 119 has a function which controls the digital TV broadcast tuner 123 and a function to access-control the BIOS-ROM 120.

The hard disk drive (HDD) 121 is a storage device which stores a variety of software components and data. The optical disk drive (ODD) 122 is a drive unit to drive a storage medium such as a DVD having video contents stored therein. The digital TV broadcast tuner 123 is a receiver device to receive broadcast program data such as a digital TV broadcast program through an antenna.

The embedded controller/keyboard controller IC (EC/KBC) 124 is a one-chip microcomputer having being integrated therein an embedded controller for power management and a keyboard controller to control the keyboard (KB) 13 and the touch panel 16. The embedded controller/keyboard controller IC (EC/KBC) 124 has a function, which turns ON/OFF the power of the computer 10 in response to a user operation of the power button 14. Further, the embedded controller/keyboard controller IC (EC/IKC) 124 can turn ON the power of the computer 10 in response to a user operation of a TV startup button 15A and a DVD startup button 15B. The network controller 125 is a communication device which executes communication with an external network such as the Internet.

With reference to FIG. 4, a description will be given with respect to a basic principle of learning a scene skipped in the past and automatically skipping the same scene, achieved by the automatic scene skipping module 203 of the video reproduction application program 200.

It is presumed that skipping by the scene skipping module 201 has been performed while reproducing the moving image stream shown in FIG. 4A ((1) in FIG. 4). The scene skipping module 201 notifies the automatic scene skipping module 203 of the reproduction position when skipping has been instructed. The automatic scene skipping module 203 requests the scene change point detection module 202 to detect a scene change point which is the nearest to the notified reproduction position ((2) in FIG. 4). For example, in the case where a certain commercial message part is skipped, an instruction is supplied immediately after the commercial message part has been started. Thus, it is common that a scene change point immediately before the instructed point is detected. Therefore, one may request the scene change point detection module 202 to detect the nearest scene change point earlier than the notified reproduction point (a point subsequent to the reproduction point may not be considered).

Then, the automatic scene skipping module 203 records the image data of the scene change point detected by the scene change point detection module 202 in the hard disk drive (HDD) 121 as automatic skip information 210. By defining the image data of this scene change point as a recording target, the same image, namely an image at a time point at which a commercial message starts, is subjected to be recorded in the event that a skipping operation has been made one second after the commercial message has been started and a case in which the skipping operation has been made two seconds after it has been started.

In addition, the scene skipping module 201 which performs skipping ((3) in FIG. 4) by a predetermined time interval also requests the scene change point detection module 202 to detect a scene change point which is the nearest to the reproduction position of its skip destination ((4) in FIG. 4). Then, the scene skipping module 201 corrects a skip destination to the scene change point detected by the scene change point detection module 202, and executes skipping to the scene change point. In this manner, over-skipping can be automatically corrected.

It is presumed that reproduction of the moving image stream shown in FIG. 4B has been performed after the automatic skip information 210 has been recorded. In FIGS. 4A and 4B, the broadcast program data may be same or different.

The automatic scene skipping module 203 compares images in this moving image stream with images recorded as automatic skip information 210 by comparing the luminance histograms thereof one another, and checks whether or not there is coincidence with reproduction image in the image recorded as the automatic skip information 210. Any of the existing techniques may be applied as to whether or not these two images are coincident with each other instead of the way to compare the luminance histograms of images.

If there is any coincidence ((5) in FIG. 4), the automatic scene skipping module 203 causes the scene change point detection module 202 to detect the nearest scene change point later than the reproduction position, and automatically skips to the detected scene change point ((6) in FIG. 4).

In this manner, once a commercial message part which seems to be unnecessary, for example, is skipped, the same commercial message part, a complete part having absorbed a time-based vibration of the skipping operation therein is automatically skipped subsequently. In addition, the cut edit assistance module 204 performs edit assistance of automatically cutting an unnecessary part (part skipped in the past) in the moving image stream recorded in the hard disk drive (HDD) 121 based on a principle similar to that of the automatic scene skipping module 203.

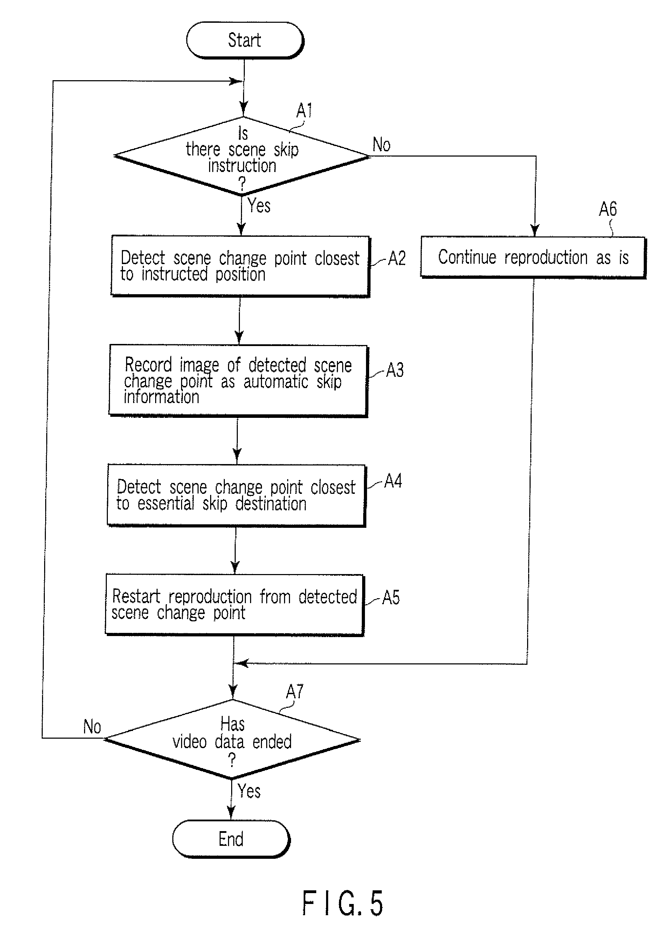

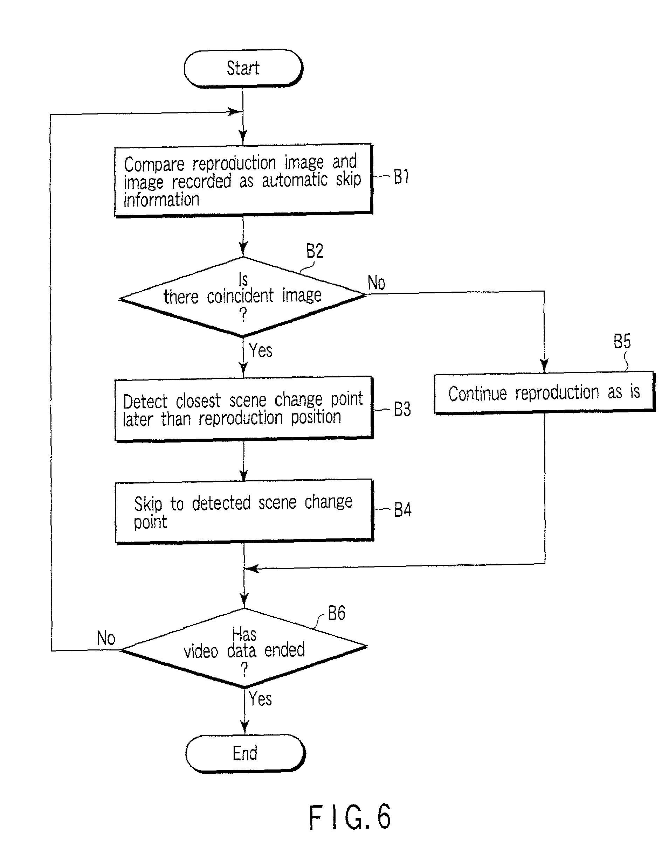

Here, with reference to flow charts of FIGS. 5 and 6, a description will be given with respect to procedures of automatic skipping process executed by the video reproduction application program 200.

If a scene skipping instruction is supplied (YES in block A1 in FIG. 5), the automatic scene skipping module 203 requests the scene change point detection module 202 to detect a scene change point which is the nearest to the thus instructed position (block A2 of FIG. 5), and records image data of the detected scene change point as the automatic skip information 210 (block A3 of FIG. 5).

At this time, the scene skipping module 201 also requests the scene change point detection module 202 to detect a scene change point which is the nearest to the skip destination (block A4 of FIG. 5), and starts reproduction from the detected scene change point (block A5 of FIG. 5).

If no scene skipping instruction is supplied (NO in block A1 in FIG. 5), reproduction is continued as is (block A6 of FIG. 5). If video data remains (NO in block A7 in FIG. 5), the processes from block A1 are repeated. When video data is ended (YES in block A7 in FIG. 5), the process is also terminated.

In addition, the automatic scene skipping module 203 compares a reproduction image with an image recorded as the automatic skip information 210 (block B1 of FIG. 6), and checks whether or not there is any coincidence with the reproduction image in the image recorded as the automatic skip information 210 (block B2 of FIG. 6).

If there is any coincidence (YES in block B2 in FIG. 6), the automatic scene skipping module 203 causes the scene change point detection module 202 to detect the nearest scene change point later than the reproduction position (block B3 of FIG. 6), and automatically skips to the detected scene change point (block B4 of FIG. 6).

If there is no coincidence (NO in block B2 in FIG. 6), reproduction is continued as is (block B5 of FIG. 6). If video data remains (NO in block B6 in FIG. 6), the processes from block B1 are repeated. Then, when video data is ended (YES in block B6 in FIG. 6), the process is terminated.

As described above, the computer 10 of the present embodiment learns a scene skipped in the past and enables the same scene to be automatically skipped.

According to one embodiment of the invention, the automatic skipping process mentioned previously is fully achieved by a computer program. Thus, advantageous effect similar to that of the present embodiment can be readily achieved merely by introducing this computer program into a general computer through a computer readable storage medium.

Namely, the present invention is not limited to the above embodiments. At the stage of implementation, the present invention can be embodied by modifying constituent elements without deviating from the spirit of the invention. In addition, a variety of inventions can be formed by proper combination of a plurality of constituent elements disclosed in the above embodiments. For example, some of all the constituent elements disclosed in the above embodiments may be erased. Further, the constituent elements over different embodiments may be properly combined with each other.

## Claims

1. An electronic device which reproduces moving image data recorded in a recording medium, **characterized by** comprising:
means (203) for comparing stored image data with an image data being reproduced; and
means (203) for skipping the moving image data ahead to a first position of the moving image data upon determination that the stored image data and the image data are coincident with each other.

2. An electronic device according to claim 1, **characterized by** further comprising:
means (203) for storing image data located at a first scene change point of the moving image data that is earlier than a position of the moving image data when a scene skipping instruction is detected.

3. An electronic device according to claim 2, **characterized by** further comprising means (202) for detecting the first scene change point being a change point between two continuous scenes in the moving image data.

4. An electronic device according to claim 3, **characterized by** further comprising means (202) for detecting a second scene change point after skipping over an interval of the moving image data, the second scene change point being a change point between two continuous scenes in the moving image data located in time after the position.

5. An electronic device according to claim 3, **characterized by** further comprising means (202) for detecting a second scene change point by skipping portions of the moving image data by a predetermined time interval, locating a nearest change point between two continuous scenes in the moving image data, and setting the nearest change point as the second scene change point.

6. An electronic device according to claim 3, **characterized in that** the means for detecting the first scene change point being a change point between two continuous scenes in the moving image data immediately before the position.

7. An electronic device according to claim 1, **characterized in that** the means for skipping skips the moving image data by a predetermined time interval.

8. An electronic device according to claim 1, **characterized by** further comprising:
means (204) for producing moving image data in which an interval skipped by the means for skipping is deleted.

9. A video reproduction application program stored in computer readable medium and executed to perform skipping operations on moving image data, **characterized by** comprising:
a scene change point detection module (202) configured to detect a first scene change point which is a change position between two continuous scenes in the moving image data; and
an automatic scene skipping module (203) to store image data of the first scene change point, to compare successive images from the moving image stream with the stored image data, and to skip the moving image data ahead to a selected position of the moving image data upon determining that an image and the stored image data are coincident with each other.

10. A video reproduction application program according to claim 9, **characterized by** further comprising a scene skipping module (201) configured to
(i) skip from a first reproduction position of the moving image data, being a location upon detecting to a second reproduction position that is separated from the scene change point by a predetermined time interval and
(ii) correct the second reproduction position to be a second scene change point that is nearest to the second reproduction position.

11. A video reproduction application program according to claim 10, **characterized in that** the scene change point detection module is configured to detect the first scene change point nearest the first reproduction position being a position of the moving image data when a scene skipping instruction is detected.

12. A scene skipping method of an electronic device which reproduces moving image data recorded in a recording medium, **characterized by** comprising:
skipping the moving image data ahead to a first reproduction position of the moving image data in response to detecting a skipping instruction;
storing (A3) image data in response to the skipping instruction;
comparing (B1) the stored image data with an image data being reproduced; and
skipping (B4) the moving image data ahead to a second reproduction position of the moving image data if the image data being reproduced and the stored image data are coincident with each other.

13. A scene skipping method according to claim 12, **characterized by** further comprising:
detecting a scene change point being a change point between two continuous scenes in the moving image data,
the stored image data corresponding to the scene change point that is nearest to a point in time at which the skipping instruction is detected.

14. A scene skipping method according to claim 12, **characterized by** further comprising:
detecting a scene change point being a change point between two continuous scenes in the moving image data,
the stored image data corresponding to the scene change point that is near a scene change point earlier than a point of time at which the skipping instruction is detected.

15. A scene skipping method according to claim 12, **characterized in that** the moving image data is skipped by a predetermined time interval.

16. A scene skipping method according to claim 15, **characterized by** further comprising:
detecting (A2) a scene change point which is nearest to the first reproduction position in the case where skipping is done by the predetermined time interval; and
correcting the first reproduction position after detecting the scene change point.

17. A scene skipping method according to claim 12, **characterized in that** the image data includes luminance histograms of an image associated with the moving image data.

18. A scene skipping method according to claim 12, **characterized in that** the image data is an image of the moving image data.
